Europäisches Patentamt

European Patent Office

Office européen des brevets

(11) Veröffentlichungsnummer: **0 197 370 B1**

(12) **EUROPÄISCHE PATENTSCHRIFT**

(45) Veröffentlichungstag der Patentschrift:
07.06.89

(51) Int. Cl.⁴: **B60L 9/04**

(21) Anmeldenummer: **86103603.6**

(22) Anmeldetag: **17.03.86**

(54) Schaltungsanordnung zur Energieversorgung eines elektrischen Gerätes.

(30) Priorität: **29.03.85 DE 3511667**

(43) Veröffentlichungstag der Anmeldung:
**15.10.86 Patentblatt 86/42**

(45) Bekanntmachung des Hinweises auf die Patenterteilung:
**07.06.89 Patentblatt 89/23**

(84) Benannte Vertragsstaaten:
**AT DE FR IT**

(56) Entgegenhaltungen:
**DE-A- 1 918 121**
**DE-A- 2 603 199**
**DE-A- 2 733 972**
**DE-A- 3 035 048**
**GB-A- 906 695**
**GB-A- 1 196 139**
**US-A- 4 204 129**

**BROWN BOVERI REVIEW, Band 69, Nr. 12, Dezember 1982, Seiten 441-452, CH; M. BRECHBÜLER et al.: "The static converter as modern power controller"**

(73) Patentinhaber: **Siemens Aktiengesellschaft Berlin und München, Wittelsbacherplatz 2, D-8000 München 2(DE)**

(72) Erfinder: **Riem, Alexander, Dipl.-Ing., Schillerstrasse 22, D-8520 Erlangen(DE)**

## Beschreibung

Die Erfindung bezieht sich auf eine Schaltungsanordnung zur Energieversorgung eines elektrischen Gerätes gemäß Oberbegriff des Anspruchs 1 bzw. des Anspruchs 3; eine derartige Schaltungsanordnung ist durch die DE-A 2 603 199 bekannt.

Durch die vorgenannte, aufgrund der DE-A 2 603 199 bekannte Anordnung soll ein magnetisches Abschirmsystem für Elektrofahrzeuge geschaffen werden, durch das die Auswirkungen der vom Elektrofahrzeug erzeugten Magnetflüsse auf die längs des Schienenweges angeordneten Signaleinrichtungen vermieden werden können; dazu werden die elektrischen Einrichtungen auf dem Elektrofahrzeug durch eng zueinander verlegte elektrische Leitungen miteinander verbunden, durch die Ströme im wesentlichen gleicher Größe, jedoch entgegengesetzter Richtung fließen, so daß die Vektorsumme der Magnetfelder dieser Ströme durch gegenseitige Aufhebung der Einzelfelder möglichst klein gehalten werden kann.

Aus der GB-A 1 196 139 ist es bekannt, zur Korrektur des kapazitiven Leistungsfaktors in einem zur Energieübertragung in einem Wechselstromnetz dienenden Kabel externe Kondensatoren durch im Kabel koaxial angeordnete zusätzliche leitende Schichten zu ersetzen, die an unterschiedliche Spannungen eines Transformators angeschlossen sind. Dabei wird von einer Leistungsfaktor-Meßeinrichtung die Spannung des Transformators selbsttätig so gesteuert, daß ein vorgegebener Leistungsfaktor bei der Energieübertragung aufrechterhalten wird.

Aus der DE-A 2 733 972 sind kunststoffisolierte Mehrleiter-Starkstromkabel, insbesondere vierrädrige Segmentleiterkabel für den Niederspannungsbereich, bekannt.

Bei Antrieben mit Gleichstromstellern, insbesondere bei Verwendung auf Fahrzeugen, wird zur Verminderung der Netzrückwirkung ein Netzfilter, bestehend aus Netzdrossel und einem als kapazitiver Energiespeicher dienenden Netzkondensator verwendet, welcher der zu speisenden Motorgruppe mit dem Gleichstromsteller parallel geschaltet ist. Eine solche Anordnung ist z.B. aus Elektrische Bahnen "Neue Triebwagen für die U-Bahn München – Die elektrische Ausrüstung – Drehstromantriebstechnik", 79. Jahrgang, Heft 11 (1981), Seiten 381 bis 387 von Helmut Fiedler und Gerhard Scholtis bekannt.

Die Obergeschwindigkeit des Netzstromes kann auf diese Weise niedrig gehalten werden. Die Abstrahlung elektromagnetischer Felder kann jedoch, bedingt durch die Leitung zwischen Gleichstromsteller und Netzfilter, nicht entsprechend gesenkt werden, obwohl der Kondensator mit seiner Kapazität von in der Regel mehr als 1mF für die benutzten Frequenzen (≥ 250 Hz) nahezu einen Kurzschluß darstellt. Auch stellt die in der Leitungsinduktivität zwischen Gleichstromsteller und Netzkondensator gespeicherte Energie ein Problem für die Auslegung des nachgeschalteten Gleichstromstellers dar. Sie führt bei Gleichstromstellern mit separatem Löschkreis zur Überladung des Löschkondensators, oder wird bei Stellern mit GTO-Thyristoren in Beschaltungselementen gespeichert. Das bedeutet, daß diese Bauteile spannungsmäßig überdimensioniert werden müssen. Bisher war man bestrebt, den kapazitiven Energiespeicher in unmittelbarer Nähe des Gleichstromstellers anzuordnen. Bei Verwendung von zwei Gleichstromstellern führte das zu einer Aufteilung des kapazitiven Energiespeichers in zwei Teilkapazitäten (siehe Zeitschrift "Der Nahverkehr" 4 (1984): Drehstromantriebe auf Fahrzeugen des Schienen-Nahverkehrs, Seiten 15 bis 24 von Herrn Dr.-Ing. A. Müller-Hellmann).

Der Erfindung liegt die Aufgabe zugrunde, eine Schaltungsanordnung der eingangs genannten Art anzugeben, bei der die im Löschkondensator bzw. in den Beschaltungselementen gespeicherte Energie klein gehalten und insbesondere für die Schaltungsanordnung eine größere Unabhängigkeit von der Auslegung des Löschkreises erreicht werden kann.

Diese Aufgabe wird erfindungsgemäß durch die Lehre des Anspruchs 1 bzw. des nebengeordneten Anspruchs 3 gelöst; der Gegenstand des Anspruchs 2 kennzeichnet eine vorteilhafte Ausgestaltung der Schaltungsanordnung gemäß Anspruch 1.

Durch die erfindungsgemäßen Schaltungsanordnungen wird erreicht, daß die in der Induktivität des Kabels gespeicherte Energie kleingehalten wird. Ferner braucht der kapazitive Energiespeicher nicht mehr in unmittelbarer Nähe des Gleichstromstellers angeordnet zu werden, sondern kann an einer beliebigen Stelle des Fahrzeugs untergebracht werden. Pro Antriebseinheit braucht nur noch ein Netzfilter vorgesehen zu werden, ohne daß eine Überdimensionierung des Löschkondensators bzw. der Beschaltungselemente erforderlich ist. Bisher führten Spannungsspitzen beim Löschvorgang häufiger zur Zerstörung des Löschkondensators. Dies wird durch die Erfindung vermieden. Dadurch kann auch bei mehreren Gleichstromstellern, die zu einer Antriebseinheit gehören und räumlich voneinander getrennt sind, z.B. in einem zweigliedrigen Strassenbahnwagen, der Vorteil einer versetzten Taktung voll genutzt werden. Darüber hinaus wird verhindert, daß bei mehreren parallelgeschalteten Masse-Verbindungen, z.B. Rädern mit Achskontakten, Teilströme über die dem Leiter parallelgeschaltete Masse fließen. Beispielsweise führen bei einem U-Bahnfahrzeug hochfrequente Teilströme, die zwischen Steller und Netzfilter über Räder und Fahrschiene fließen, zur Beeinflussung der Gleisfreimeldeanlage. Hochfrequente Stromimpulse, die beim Takten des Stromes entstehen, führen nicht mehr zur Abstrahlung elektromagnetischer Wellen.

Zwei Ausführungsbeispiele der Erfindung sind in der Zeichnung dargestellt. Darin zeigen:

Fig. 1 eine Schaltungsanordnung für ein kurzgekuppeltes Fahrzeug mit zwei Gleichstromstellern,

Fig. 2 einen Querschnitt der Leitung zwischen dem kapazitiven Energiespeicher und dem Stromrichter und

Fig. 3 eine andere Ausbildung der Leitung.

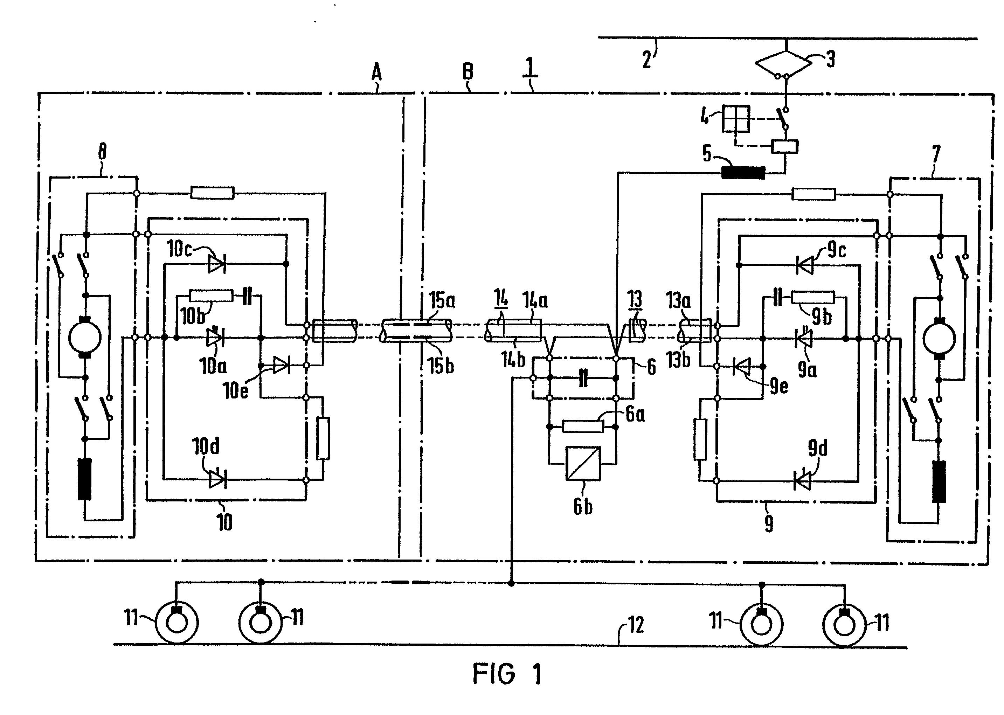

Wie Fig. 1 zeigt, wird einem kurzgekuppelten elektrischen Triebfahrzeug 1 elektrische Traktionsenergie vom Fahrdraht 2 über einen Stromabnehmer 3 zugeführt. Der Stromabnehmer 3 ist über einen Hauptschalter 4, eine Netzdrossel 5, die beiden Gleichstromsteller 9 und 10 sowie die beiden Motorgruppen 7 und 8 über die Räder 11 mit der Schiene 12 als Rückleitung verbunden. Parallel zu den Motorgruppen 7, 8 mit den Gleichstromstellern 9, 10 liegt ein als kapazitiver Energiespeicher 6 dienender Netzkondensator. Diesem Netzkondensator sind ein Dauerentladungswiderstand 6a und eine Vorrichtung 6b zur Spannnungserfassung zugeordnet.

Die Gleichstromsteller 9 und 10 besitzen im wesentlichen GTO-Thyristoren 9a, 10a mit Beschaltungselementen 9b, 10b, und Freilaufdioden 9c, 10c sowie Halbleiter 9d, 9e, 10d, 10e für den Bremsbetrieb.

Die Leitungen 13a, 13b zwischen dem kapatzitiven Energiespeicher 6 und dem Stromrichter 9 sind in einem einzigen Kabel 13 derart zusammengefaßt, daß sich eine induktivitätsarme, kapazitätsreiche Verbindung zwischen Stromrichter 9 und kapazitivem Energiespeicher 6 ergibt.

In gleicher Weise sind auch die Leitungen 14a, 14b zwischen dem kapazitiven Energiespeicher 6 und dem Stromrichter 10 zusammengefaßt, wobei die Leitungen 14a und 14b über Kupplungselemente 15a, 15b zwischen den Fahrzeughälften A und B geführt sind.

Wegen der geringen Induktivität des verwendeten Kabels und weil die Schleifenflächen zwischen den Leitern 13a, 13b bzw. 14a, 14b sehr kleingehalten werden, brauchen die Beschaltungselemente 10b in den räumlich weiter entfernten Stromrichter 10 nicht größer als in dem in der Nähe des kapazitiven Energiespeichers 6 liegenden Stromrichter 9 ausgelegt zu werden.

Gegenüber bekannten Ausführungen braucht nur noch ein gemeinsames an beliebiger Stelle im Fahrzeug anzuordnendes Netzfilter für beide Stromrichter 9 und 10 vorgesehen zu werden. Damit ergibt sich die Möglichkeit, die beiden Stromrichter versetzt zu takten. Das widerum bedeutet für die Netzdrossel und den kapazitiven Energiespeicher eine Auslegung auf die doppelte Frequenz und damit eine erhebliche Verkleinerung.

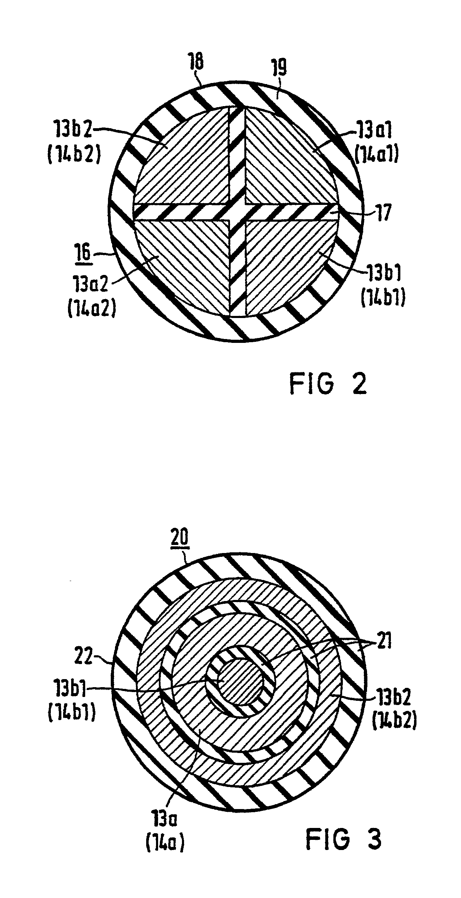

Die induktivitätsarme, kapazitätsreiche Verbindung zwischen Stromrichter 9 bzw. 10 und kapazitivem Energiespeicher 6 kann durch die Ausbildung der Leitungen 13a, 13b bzw. 14a, 14b als Sektorleiterkabel 16 erzielt werden (Fig. 2). Wird dabei das Kabel 16 als 4-Sektorleiterkabel ausgebildet, so ist es zweckmäßig, jeweils zwei diagonal gegenüberliegende Teilleiter 13a1, 13a2 bzw. 13b1, 13b2 elektrisch leitend miteinander zu verbinden. Zwischen den einzelnen Teilleitern ist eine Lage aus Isolierstoff 17 angeordnet. Zwischen den Teilleitern und dem Mantel 18 liegt eine weitere Isolierschicht 19.

Figur 3 zeigt eine andere Ausführungsmöglichkeit, bei der das Kabel als Koaxialkabel 20 ausgebildet ist. Bei Ausbildung des Kabels als Dreileiter-Koaxialkabel sind der innere Leiter 13b1 und der äußere Leiter 13b2 elektrisch leitend miteinander verbunden. Zwischen den einzelnen Leitern 13b1, 13a und 13b2 bzw. 14b1, 14a und 14b2 sind Isolierstoffschichten 21 koaxial angebracht. Ein gemeinsamer Mantel 22 bildet den Schutz gegen äußere Einflüsse.

## Patentansprüche

1. Schaltungsanordnung zur Energieversorgung eines elektrischen Gerätes, das über einen Stromrichter (9) und ein einen kapazitiven Energiespeicher (6) enthaltendes Netzfilter aus einer Gleichspannungsquelle gespeist wird, wobei sowohl die positive als auch die negative Leitung (13a, 13b) zum Stromrichter (9) am kapazitiven Energiespeicher (6) angeschlossen und die Leitungen (13a, 13b) zwischen dem kapazitiven Energiespeicher (6) und dem Stromrichter (9) im Sinne einer induktivitätsarmen Verbindung in engem räumlichen Abstand zueinander verlegt sind, dadurch gekennzeichnet, daß die Leitungen (13a, 13b) zwischen dem kapazitiven Energiespeicher (6) und dem Stromrichter (9) in einem induktivitätsarmen und kapazitätsreichen Sektorleiterkabel (16) zusammengefaßt sind.

2. Schaltungsanordnung nach Anspruch 1, dadurch gekennzeichnet, daß bei Ausbildung des Sektorleiterkabels (16) als 4-Sektorleiterkabel jeweils zwei diagonal gegenüberliegende Teilleiter (13a1, 13a2 bzw. 13b1, 13b2) elektrisch leitend miteinander verbunden sind.

3. Schaltungsanordnung zur Energieversorgung eines elektrischen Gerätes, das über einen Stromrichter (9) und ein einen kapazitiven Energiespeicher (6) enthaltendes Netzfilter aus einer Gleichspannungsquelle gespeist wird, wobei sowohl die positive als auch die negative Leitung (13a, 13b) zum Stromrichter (9) am kapazitiven Energiespeicher (6) angeschlossen und die Leitungen (13a, 13b) zwischen dem kapazitiven Energiespeicher (6) und dem Stromrichter (9) im Sinne einer induktivitätsarmen Verbindung in engem räumlichen Abstand zueinander verlegt sind, dadurch gekennzeichnet, daß die Leitungen (13a, 13b) zwischen dem kapazitiven Energiespeicher (6) und dem Stromrichter (9) in einem induktivitätsarmen und kapazitätsreichen Dreileiter-Koaxialkabel (20) zusammengefaßt sind, dessen innerer Leiter (13b1) mit dessen äußerem Leiter (13b2) elektrisch leitend verbunden ist.

## Claims

1. Circuit arrangement for the energy supply of an electrical device which is fed from a direct voltage source by way of a power converter (9) and a network filter, containing a capacitive energy store (6), both the positive and the negative lines (13a, 13b) to the power converter (9) being connected to the capacitive energy store (6) and the power converter (9) being laid in the sense of a low-inductance connection with narrow spatial clearance between them, characterised in that the lines (13a, 13b) between the capacitive energy store (6) and the power converter (9) are combined in a low-inductance and high-capacitance sector conductor cable (16).

2. Circuit arrangement according to claim 1, characterised in that with development of the sector conductor cable (16) as a 4-sector conductor cable, in each case, two diagonally opposed part conductors (13a1, 13a2 or 13b1, 13b2) are connected with each other in an electrically conductive manner.

3. Circuit arrangement for the energy supply of an electrical device which is fed from a direct voltage source by way of a power converter (9) and a network filter, containing a capacitive energy store (6), both the positive and the negative lines (13a, 13b) to the power converter (9) being connected to the capacitive energy store (6) and the power converter (9) being laid in the sense of a low-inductance connection with narrow spatial clearance between them, characterised in that the lines (13a, 13b) between the capacitive energy store (6) and the power converter (9) are combined in a low-inductance and high-capacitance three conductor coaxial cable (20), the inner conductor (13b1) of which is connected with its outer conductor (13b2) in an electrically conductive manner.

**Revendications**

1. Montage pour alimenter en énergie un appareil électrique qui est alimenté à partir d'une source de tension continue par l'intermédiaire d'un convertisseur statique (9) et d'un filtre de réseau contenant un accumulateur capacitif d'énergie (6), et dans lequel aussi bien le conducteur positif que le conducteur négatif (13a, 13b) aboutissant au convertisseur statique (9) sont raccordés à l'accumulateur capacitif d'énergie (6) et les conducteurs (13a, 13b) sont disposés à une distance spatiale réciproque très faible entre l'accumulateur capacitif d'énergie (6) et le convertisseur statique (9) en vue de l'obtention d'une liaison présentant une faible induction, caractérisé par le fait que les conducteurs (13a, 13b) sont réunis entre l'accumulateur capacitif d'énergie (6) et le convertisseur statique (9) dans un câble (16) à âmes sectorales, présentant une faible inductance et une capacité élevée.

2. Montage suivant la revendication 1, caractérisé par le fait que dans le cas de la réalisation du câble (16) à âmes sectorales sous la forme d'un câble à 4 âmes sectorales, deux conducteurs partiels (13a1, 13a2 ou 13b1, 13b2), opposés en diagonale, sont respectivement reliés d'une manière électriquement conductrice l'un à l'autre.

3. Montage pour alimenter en énergie un appareil électrique qui est alimenté à partir d'une source de tension continue par l'intermédiaire d'un convertisseur statique (9) et d'un filtre de réseau contenant un accumulateur capacitif d'énergie (6), et dans lequel aussi bien le conducteur positif que le conducteur négatif (13a, 13b) aboutissant au convertisseur statique (9) sont raccordés à l'accumulateur capacitif d'énergie (6) et les conducteurs (13a, 13b) sont disposés à une distance spatiale réciproque très faible entre l'accumulateur capacitif d'énergie (6) et le convertisseur statique (9) en vue de l'obtention d'une liaison présentant une faible induction, caractérisé par le fait que les conducteurs (13a, 13b) sont réunis, entre l'accumulateur capacitif d'énergie (6) et le convertisseur statique (9), dans un câble coaxial (20) à trois conducteurs, présentant une faible inductance et une capacité élevée et dont le conducteur intérieur (13b1) est relié selon une liaison électriquement conductrice au conducteur extérieur (13b2) de ce câble.

FIG 1

EP 0 197 370 B1

18    19

13b2
(14b2)                    13a1
                          (14a1)

                          17

16
13a2
(14a2)                    13b1
                          (14b1)

FIG 2

20

                          21

22
13b1
(14b1)                    13b2
                          (14b2)

13a
(14a)        FIG 3